# EUROPEAN PATENT SPECIFICATION

(11) **EP 0 496 812 B1**
(45) Date of publication and mention of the grant of the patent: **17.04.1996**
(21) Application number: 90916333.9
(22) Date of filing: 19.10.1990
(51) Int. Cl.: G01N 25/48

(54) **APPARATUS FOR ASSESSING A PARTICULAR PROPERTY IN A MEDIUM**
GERÄT ZUR BEURTEILUNG BESONDERER EIGENSCHAFTEN EINES MEDIUMS
APPAREIL SERVANT A EVALUER UNE CARACTERISTIQUE PARTICULIERE D'UN MILIEU

(30) Priority: 20.10.1989 GB 8923699
(43) Date of publication of application: 05.08.1992
(73) Proprietor: University of Strathclyde, Glasgow G1 1YQ, Scotland (GB)
(72) Inventor: CULSHAW, Brian Cromdale Gryffe Road, Ayrshire PA13 4BD (GB); TURNER, Anthony, Peter, Francis Evergreens, Cranfield Bedford MK43 0BD (GB)
(74) Representative: MacDougall, Donald Carmichael
(86) International application number: GB9001615
(87) International publication number: WO9105999

(56) References cited:
- WO-A-89/07753
- DE-A- 2 415 997
- FR-A- 2 359 419
- Analytical Chemistry, vol. 53, no. 1, January 1981, American Chemical Society, (Easton, Pennsylvania, US), K. Mosbach et al.: "Thermal bio-analyzers in flow streams enzyme thermistor devices", pages 83,84,86,89-91,94
- Sensors and Actuators, vol. 19, no. 1, 1st August 1989, Elsevier Sequoia, (Lausanne, CH), B. Xie et al.: "A versatile thermal biosensor", pages 53-59
- P.H.Sydenham: Handbook of Measurement Science, Volume 2, John Wiley & Sons Ltd., 1983

## Description

This invention relates to apparatus for assessing a property of a medium, particularly but not exclusively a fluid medium.

A known form of apparatus for assessing a property of a fluid comprises an optical fibre coated near its tip with an enzyme or antibody. When the coated tip is contacted with the fluid, enzyme-catalysed reactions create localised heating and expansion of the fibre and the rate of expansion, and hence the rate of reaction, is measured by comparing the fibre length with that of an adjacent reference fibre using interferometry. The known apparatus is not temperature stable and operation depends on the expansion of an optical fibre which is a disadvantage where space is limited.

It is an object of the present invention to provide a new and improved form of apparatus for assessing a property of a medium in which the aforementioned disadvantages are obviated or substantially mitigated. This is achieved by using apparatus wherein localised heating, created for example by a chemical reaction, causes the resonant frequency of a vibrating member to change, the change in frequency being an assessment or measure of the property.

According to the present invention there is provided an apparatus for assessing a particular property of a medium as defined in claim 1.

The property of the medium may be the presence in the medium of a natural or synthesised chemical or biologicial species e.g. an antibody, an antigen, or a barbiturate capable of being conjugated with a sensor means which includes an enzyme.

The vibratile element may be fabricated from a semi-conductor wafer and may be disposed relative to an optical fibre delivery means to form a Fabry-Perot cavity so that the element is self-oscillating when the energy is continuous or the element may be maintained in resonant oscillation, (without forming a cavity with the delivery means) by a feedback drive system applied to the delivery means.

The delivery means and the collecting means may include fibre light guide means. The, or each, fibre light guide means may comprise a single optical fibre fused or otherwise bonded to the chamber structure. The feedback drive system may also include a high gain amplifier and a counter.

The sensor means may be chemically reactive with the medium in exothermic or endothermic manner and may comprise an enzyme selected so that the particular property to be assessed is the substrate of the enzyme. The sensor means may include a diffusion barrier. The sensor means may be in the form of a coating on the exterior of the chamber structure. The coating may be replaceable.

High concentrations of a property in a chemical are difficult to measure with enzymic reactions since there is non-linearity between the rate of exothermic reaction and substrate concentration. Such substrates can be measured by including a diffusion barrier in the sensor means between the catalyst and the medium to be assessed thus reducing 'apparent' concentrations as viewed by the catalyst. A typical diffusion barrier is a chemically inert plastic membrane.

It will be appreciated that a sensor means which will cause local changes in temperature during a chemical reaction can be found for most naturally occurring and some synthetic chemicals and biological species and a number of different properties can therefore be assessed.

By virtue of being closed the chamber is impenetrable to moisture. The chamber may also be evacuated. The closed chamber structure is thermally insulated other than at the location of the sensor means.

Embodiments of the invention can be used in a broad range of applications from continuous monitoring of process control in the food and fermentation industries measuring, for example pH, to discrete sample analysis in human diagnostics where there is a need for rapid results to complement the clinical history and examination of patients in hospitals.

Embodiments of microminiature construction are very portable and this can be important, for example, for use by mobile medical teams. Microminiature size also permits use on internal parts of the body where access is difficult and also in microsurgery. The sensor structures can be batch fabricated so reducing the overall cost of the device.

Embodiments of the present invention will now be described by way of example with reference to the accompanying schematic drawings, in which:
Fig. 1 illustrates apparatus according to the present invention in diagrammatic form;
Fig. 2 illustrates a preferred embodiment of the present invention;
Fig. 3 shows a part of the Fig. 2 embodiment in more detail;
Fig. 4 illustrates a further embodiment of the present invention.
Figs. 5A and 5B show side and plan views of a device outside the scope of the claims and using an electrostatic drive;
Figs. 6A and 6B show a further device outside the scope of the claims and using an electromagnetic drive;
Figs. 7A and 7B show yet a further device outside the scope of the claims and using an ultrasonic drive; and
Figs. 8A, 8B and 8C show a modified version of the embodiment described in Figs. 5A and 5B.

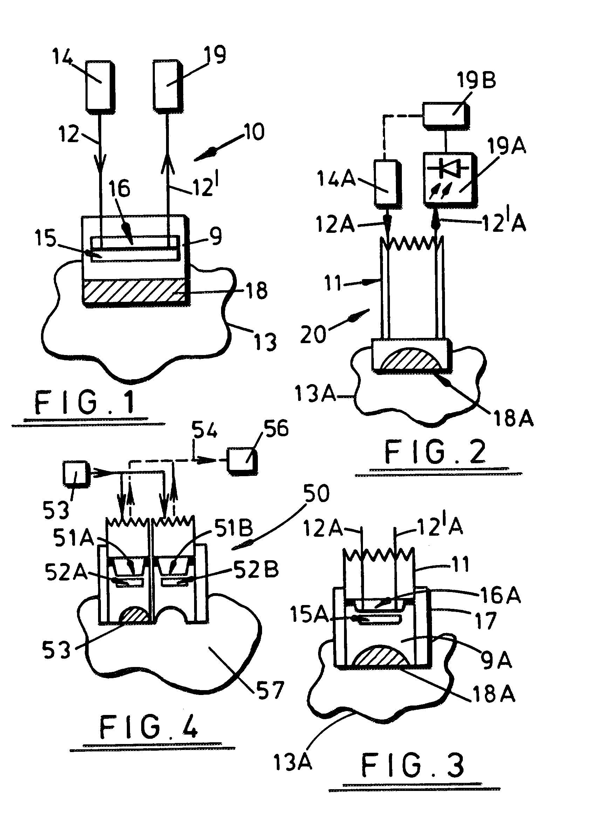

With reference to Fig. 1 apparatus 10 for assessing a particular property of a medium 13 utilises energy 12 originating from a delivery means 14 and incident on a vibratile element 16 located within a closed chamber 15. Element 16 is mounted on the structure 9 forming the chamber 15 and is caused to vibrate at its resonant frequency by the energy 12. Sensor means 18 mounted on an exterior surface of the structure 9 is capable of being thermally activated and causes changes in temperature of the structure 9 when contacted with the particular property of the medium 13 to which the sensor means is sensitive. The changes in temperature of the structure 9 cause the resonant frequency of the vibratile element 16 to change so that vibration sensing energy 12' (which may be the reflected excitation energy 12 or energy from a separate source) is modulated at the new resonant frequency of the element 16 which is detected by collecting means 19. The resonant frequencies of the vibratile element 16 prior to and after the temperature change caused by the sensor means 18 contacting medium 13 are compared and the change is an assessment of the presence of said particular property of the medium 13.

Fig. 2 and Fig. 3 show a preferred embodiment 20 of the present invention for assessing the concentration of hydrogen peroxide in a fluid medium 13A. Energy, conveniently being light 12A originating from a laser light source 14A, is directed through an optical fibre waveguide 11 and onto vibratile element 16A fabricated from a semiconductor wafer 9A. The light 12A is synchronised, for example by being pulsed at a repetition rate controlled using the modulation of reflected light 12'A to operate a feedback loop, to cause the element 16A to vibrate continuously at its resonant frequency.

Element 16A is a bridge formed by undercutting (or tunnelling) beneath the floor of a depression or well formed in the silicon wafer and the chamber 15A containing element 16A is closed by the upper surface of the wafer 9A being adherent to the waveguide 11. Element 16A is physically isolated from the medium 13A by the remaining thickness of wafer 9A so that the physical characteristics (e.g. viscosity) of the medium 13A do not directly influence the motion of the element 16A. The wafer 9A is generally enclosed and thermally isolated by a laterally-extending barrier 17 which may be formed of one or more oxides of silicon. Sensor means 18A, in the form of a polymerised gel containing a chemical catalyst such as catalase, is disposed on the non-thermally enclosed exterior surface of the wafer 9A and reacts in an exothermic manner on contact with hydrogen peroxide in the medium 13A causing a change in temperature in the chamber structure.

The structure shown in Fig. 3 is preferably fabricated from a silicon wafer 750 microns thick with a 500 micron diameter hemispherical cavity formed (by etching) in its under surface to receive the sensor means 18A and the vibratile element 16A is a beam etched at a distance below the top surface of the wafer. Typically this provides a chip 750 x 750 microns in area. The lateral external surfaces of the chip are thermally insulated with a layer 17 of silicon oxide resulting in minimal surface area of the chip in contact with the medium 13A but maximum surface area of the chip in contact with the gel containing the catalase. Accordingly, heat generated by the catalase in reacting with its hydrogen peroxide substrate is preferentially directed into the silicon wafer 9A, the thermal conductivity of which is relatively high, so that a measurable temperature change in the chip results. For example with a silicon oxide coating 100 microns in thickness temperature changes of the order of 1°K are readily obtained. Substantially higher temperature changes arise when polystyrene is substituted for the silicon oxide. A preferred form of the Fig. 3 structure fabricated from a silicon wafer has its undersurface cavity of truncated pyramidal form (since this is easier to etch than hemispherical) and the well formed beneath the vibratile element is also of truncated pyramidal form. The vibratile element may be a beam with a single span or a beam with a double span (thereby forming a type of double tuning fork resonant structure).

Waveguide 11 is a single optical fibre fused via a suitable bonding material to the silicon wafer 9A. Light 12'A reflected from the element 16A is collected by the waveguide 11 and detected by a photodiode 19A. Using known electronic equipment 19B connected to the photodiode 19A the initial resonant frequency of the vibratile element 16A and the changed resonant frequency are compared. From this comparison the rate of chemical action between the catalase 18A and the hydrogen peroxide is determined and for a known concentration of catalase the concentration of hydrogen peroxide in the medium 13A can be found.

The apparatus which has been described with reference to Fig. 3 is microminiature in size and is low in thermal mass so that it responds rapidly e.g., in about 100 micro-seconds to temperature changes as low as or lower than 1 x 10⁻³ Kelvin degrees.

Fig. 4 shows a further embodiment 50 of the present invention for providing a method of assessing a particular property of a medium 57 when variations in the ambient temperature of the medium 57 are expected. The embodiment 50 has two adjacent vibrating elements 51A, 51B respectively located within separate closed chambers 52A, 52B formed by individual silicon wafers and bonded optical fibres. A single thermal barrier surrounds and unifies the two structures. Light originating from light delivery means 53, conveniently a laser, is delivered to both chambers to excite both elements 51A, 51B into resonance and is reflected (54) from the vibrating elements 51A, 51B, to be detected by light collecting means 56. Sensor means 55 are disposed on an exterior surface of the structure forming chamber 52A and affect the vibratile element 51A in a fashion similar to that of the embodiment shown in Fig. 2 and Fig. 3 (i.e. being affected by both the temperature of the medium 57 and by the particular property of the medium to which the sensor means 55 are sensitive) but sensor means are absent from the exterior surface of the structure forming chamber 52B so that the vibratile element 51B will be affected only by the ambient temperature of the medium 57. Any changes in the ambient temperature of the medium 57 can therefore be separately detected and subtracted to give a temperature-independent assessment of the property of the medium.

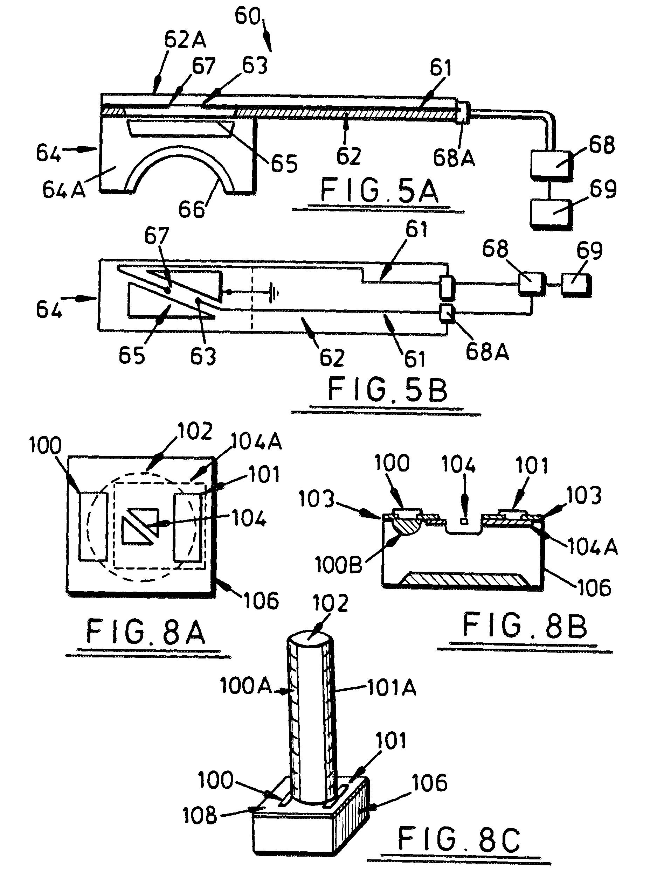

Figs. 5A and 5B show in side and plan views a device, which does not fall within the scope of the claims and which comprises an electrostatically driven resonant biosensor 60. Biosensor 60 comprises a silicon wafer 64A carrying sensor means 66 and vibratile element 65 the top surface of which is contiguous with the top surface of the wafer 64A. Secured to the top surface of the wafer 64A (but not to the element 65) is a structure which incorporates an interrupted conductive electrode 61 which is arranged, at least in part, to overlie the element 65. Electrode 61 is evaporated onto an oxidised silicon carrier 62A and is covered by a layer 62 of oxidised silicon which has a window in registry with the well in wafer 64A containing the element 65. Secural of the conductor support to the wafer is preferably by bonding. Conveniently the conductor support is of smaller bulk than the structure which incorporates the vibratile element and the layer 62 is thermally insulating material which acts so as to minimise heat loss by conduction. Additionally conductive electrode 61 is of minimal cross section. The electrode 61 extends along support 62A from a terminal 68A and terminates at a point 63 which over lies the vibratile element 65. The electrode 61 continues from a point 67 spaced from point 63 and connects to a high gain amplifier 68 and counter 69. The wafer 64A is N⁺ and the vibratile element 65 is doped with boron so as to be P⁺ and is earthed. Application of a voltage V (which initially may be a noise voltage) to the drive part of the electrode 61 electrostatically deflects the P⁺ doped element 65 due to the capacitance between the conductor part containing point 63 and the element 65. This deflection is monitored using the changing capacitance that is consequently established between the conductor part containing point 67 and the conductive element 65. The change in charge in the sensing part of the electrode 61 due to the varying capacitance is amplified by amplifier 68 and fedback to the terminal 68A and the circuit effectively becomes an oscillator. The oscillating circuit is connected to a counter 69 which counts the number of deflections of the vibratile element 65 per unit time.

As discussed in earlier embodiments when in contact with an appropriate medium sensor 66 which is coated on to substrate 64A, causes localised heating in the structure 64 so that the vibrational frequency of the element 65 changes which is monitored by the capacitance between 67 and 65. The change in oscillation frequency of the oscillator is counted on the counter 69 and compared with earlier values to give an assessment of the property in the medium.

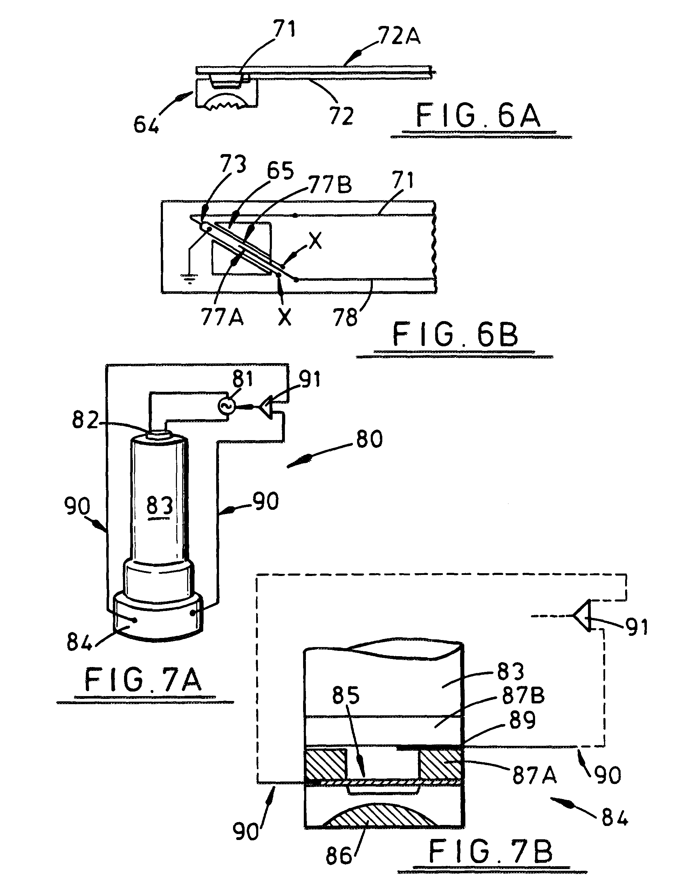

Figs. 6A and 6B show yet a further device which does not fall within the scope of the claims, wherein the excitation energy is still electrical as in Figs. 5A and 5B but the forces causing deflection of the vibratile element are electromagnetic rather than electrostatic. The structure 64 is similar to that of Figs. 5A and 5B but the conductor which overlies the structure 64 has a different layout and is electrically connected to the vibratile element 65 so that electrical current flows through element 65. The conductive electrode 71 is evaporated onto an oxidised silicon carrier 72A and has a covering 72 of silicon oxide over most of its extent but in the region of the vibratile element 65 the covering 72 is absent. Conductor 71 has a current drive end 73 which is bifurcated into parallel conductor parts 77A, 77B which overlie and extend along the length of the vibratile element 65 being spaced therefrom by the thickness of the covering 72. However at their ends remote from point 73 parts 77A, 77B extend across the thickness of covering 72 and into electrical contact at points X with the P⁺ region of the structure 64 adjacent one end of the element 65. The other end of element 65 is connected to earth. Thus drive end 73 carries two parallel flows of current in one direction whilst element 65 carries the total current flow in the opposite direction and accordingly the element 65 is stimulated electromagnetically into resonance with suitable pulsing of the current flow. It will be appreciated that although it would be possible to use a single lead in the drive end 73, the alignment of the lead would cause the vibratile element to move in a "skew" fashion and this is undesirable. A second conductive electrode 78 evaporated onto the carrier 72A functions as an electrostatic movement detector in a manner similar to that explained with reference to Figs. 5A,B for conductor portion containing point 67.
Figs. 7A and 7B show an ultrasonic biosensor 80 which does not fall under the scope of the claims and which has an oscillator 81 connected to an ultrasonic transducer 82 located at the top of a waveguide 83 which at its lower end has ahead 84 shown in detail in Fig. 7B. The head 84 comprises a wafer having a vibratile element 85 which is doped with boron so as to be P⁺. A sensor 86 has its outer surface in contact with a medium to be assessed. A first layer of oxidised silicon 87A is disposed on the top surface of the wafer except for the area above the element 85. A single conductive metallic strip 89 is evaporated onto the underside of a second silicon oxide layer 87B which overlies the first layer 87A and the upper surface of the second silicon layer 87B is interfaced with the waveguide 83. Ultrasonic waves generated by the transducer 82 at a frequency determined by the oscillator 81 pass down the waveguide 83 and excite the vibratile element 85 into resonant oscillation. The change in capacitance between the vibratile element 85 (which has vertical movement), and the metallic strip 89 due to the element's vibration will be detected since both the vibratile element 85 and strip 89 are connected to a detection system via wires 90.

To maintain oscillation of the element 85 the detection system is connected to a feedback drive system having an amplifier 91 which provides a control signal to the oscillator 81 if the frequency of the ultrasonic waves requires to be altered. It will be appreciated that, although not shown, a counter can be connected in parallel with the amplifier and oscillator to give a reading of the frequency of oscillation of the element. Silica is capable of conducting light and ultrasound equally efficiently and if, for example, waveguide 83 is an optical fibre made of silica then optical detection of the vibration could be incorporated with the ultrasonic excitation.

A modified version of the device described in Figs. 5A, 5B is shown in Figs. 8A, 8B, 8C wherein the excitation is electrical. In Fig. 8B an N type substrate 106 has an undersurface cavity for carrying the property-sensing means and an uppersurface well incorporating the resonant element in the form of a bridge 104. The bridge 104 forms part of a P⁺ doped region 104A diffused into part of the substrate 106. Also diffused into substrate 106 is an N⁺ contact diffusion layer 100B but which is spaced from P⁺ region 104A so that a P-N junction is formed. A conductive metal pad 100 is deposited onto layer 100B and a conductive metal pad 101 is deposited onto region 104A and a D.C. bias voltage is applied to these pads 100, 101 in order to excite the vibratile element 104 into vibration. The bias voltage is delivered to the pads 100, 101 via metal tracks 100A, 101A formed on the surface of a silica post 102 the lowermost end of which forms a cover for the well containing the bridge 104 and which is spaced above the bridge 104 by an intervening layer of silicon 103. The exterior surfaces of the assembly are covered with a thermal insulation layer 108 which may be made of polystyrene.

It will be appreciated that capacitance occurs at the junction between the substrate 106 and the region 104A so that changes in capacitance caused by vibration of the bridge 104 are detectable in a manner similar to that of Fig. 5.
It will be appreciated that the material-property-sensing structure is common to all embodiments of the present invention; the excitation delivery and vibration-signal collecting means are optical.

The area of the sensing head is microminiature and effectively measures a single point in the medium. When the medium has a large volume then a single point measurement may be unrepresentative of the bulk. By multiplexing a number of sensors located throughout the medium or by increasing the effective area of the sensing head a more accurate assessment of a property of the medium can be made.

To further improve the accuracy of readings a thermally insulating sleeve could be disposed over the entire apparatus minimising any heat loss to ambient. Sensitivity could be varied by changing the material and co-efficient of thermal expansion of the vibratile element.

It will be appreciated that in the foregoing embodiments utilising optical excitation the reflected light which is collected by the collecting means emanates originally from the delivery means the principal purpose of which is to excite the element-into oscillation. However the collecting means may collect reflected light emanating from a separate light source provided specifically for the collecting and measuring system in the manner described in International Patent Specification No. Wo 86/05271.

## Claims

1. Apparatus for assessing a particular property of a medium, comprising structure (9A,11) forming a closed chamber (15) and having at least one vibratile element (16A) located within said closed chamber (15) such that element 16A is physically isolated from medium (13A), said structure (9A,11) having a thermally conductive portion (9A) and the vibratile element (16A) being thermally coupled within said chamber (15) to said thermally conductive portion (9A);
optical excitation means (11,12A) for delivering optical excitation energy incident to said vibratile element (16A) so as to cause the vibratile element (16A) to vibrate at its resonant frequency ;
optical means (12A,19A) for monitoring and detecting the vibration frequency of the vibratile element (16A);
sensor means (18A) mounted in a cavity formed in an exterior surface of the thermally conductive portion (9A) to enable contact with said medium, said sensor means (18A) being a material which is chemically reactive with the medium and is thermally activated when contacted with said medium having said particular property for changing the temperature of the chamber and hence the resonant frequency of the vibratile element (16A) by heat transfer through the thermally conductive portion (9A), said changes in said resonant frequency being monitored and detected by the optical monitoring and detecting means (12A,19A) which provides an assessment of the presence of said particular property of said medium,
the surfaces of said structure (9A,11) other than said exterior cavity surface being thermally insulated with an insulating layer (17).

2. Apparatus according to claim 1, wherein the sensor means (18A) comprises an enzyme selected so that the particular property to be detected is the substrate of the enzyme.

3. An apparatus according to claim 2, wherein the sensor means (18A) comprises a diffusion barrier.

4. Apparatus according to claim 1, wherein the thermally conductive portion (9A) is a semi-conductor wafer segment chip, said vibratile element (16A) being formed within a first well in the upper surface of the wafer and said sensor means being located in a second well or cavity in the lower surface of the wafer.

5. Apparatus according to claim 4, further comprising an optical fibre (11) bonded to the upper surface of the wafer and overlying said first well therein, said optical fibre (11) being provided for the delivery of the optical excitation energy and for the monitoring and detecting of the vibration frequency of the vibratile element (16A).

6. Apparatus according to claim 1, wherein the thermally conductive portion (9A) is a silicon wafer and the insulating layer (17) is formed of one or more oxides of silicon.

7. Apparatus as claimed in claim 1, wherein the insulating layer (17) is formed of polystyrene.

## Patentansprüche

1. Vorrichtung zum Beurteilen einer besonderen Eigenschaft eines Mediums, mit einem Aufbau (9A, 11), der eine geschlossene Kammer (15) bildet und mindestens ein vibrierfähiges Element (16A) aufweist, das innerhalb der geschlossenen Kammer (15) derart angeordnet ist, daß das Element (16A) von dem Medium (13A) physikalisch isoliert ist, wobei der Aufbau (9A, 11) einen wärmeleitfähigen Abschnitt (9A) aufweist und das vibrierfähige Element (16A) innerhalb der Kammer (15) mit dem wärmeleitfähigen Abschnitt (9A) thermisch gekoppelt ist,
mit einem Mittel (11, 12A) zur optischen Anregung für die Abgabe von optischer Anregungsenergie, die in das vibrierfähige Element (16A) einfällt, um das vibrierfähige Element (16A) zum Vibrieren bei seiner Resonanzfrequenz zu bringen,
mit einem optischen Mittel (12A, 19A) zum Überwachen und Erfassen der Vibrationsfrequenz des vibrierfähigen Elements (16A),
mit einem Sensor (18A), der in einem Hohlraum befestigt ist, welcher in einer Außenoberfläche des wärmeleitfähigen Abschnitts (9A) ausgebildet ist, um einen Kontakt mit dem Medium zu ermöglichen, wobei der Sensor (18A) ein Material ist, das mit dem Medium chemisch reagiert und thermisch aktiviert wird, wenn es mit dem Medium in Kontakt kommt, das die besondere Eigenschaft des Änderns der Temperatur der Kammer und somit der Resonanzfrequenz des vibrierfähigen Elements (16A) durch Wärmetransport durch den wärmeleitfähigen Abschnitt (9A) hindurch aufweist, wobei diese Änderungen in der Resonanzfrequenz durch das optische Mittel (12A, 19A) zum Überwachen und Erfassen, welches eine Beurteilung der Anwesenheit dieser besonderen Eigenschaft des Mediums ermöglicht, überwacht und erfaßt werden,
wobei die Oberflächen des Aufbaus (9A, 11), die nicht die genannte Außenoberfläche des Hohlraums darstellen, mit einer Isolierschicht (17) thermisch isoliert sind.

2. Vorrichtung nach Anspruch 1, worin der Sensor (18A) ein Enzym umfaßt, das derart ausgewählt ist, daß die zu erfassende besondere Eigenschaft das Substrat des Enzyms darstellt.

3. Vorrichtung nach Anspruch 2, worin der Sensor (18A) eine Diffusionsbarriere aufweist.

4. Vorrichtung nach Anspruch 1, worin der wärmeleitfähige Abschnitt (9A) ein Halbleiterplatte-Segmentchip ist und das vibrierfähige Element (16A) innerhalb einer ersten Bohrung in der oberen Oberfläche der Platte ausgebildet sowie der Sensor in einer zweiten Bohrung oder einem Hohlraum in der unteren Oberfläche der Platte angeordnet ist.

5. Vorrichtung nach Anspruch 4, die weiterhin eine optische Faser (11) aufweist, die mit der oberen Oberfläche der Platte verbunden ist und die genannte erste Bohrung darin überlagert, wobei die optische Faser (11) für die Abgabe von optischer Anregungsenergie und für das Überwachen und Erfassen der Vibrationsfrequenz des vibrierfähigen Elements (16A) vorgesehen ist.

6. Vorrichtung nach Anspruch 1, worin der wärmeleitfähige Abschnitt (9A) eine Siliciumplatte ist und die Isolierschicht (17) aus einem oder mehreren Siliciumoxiden gebildet ist.

7. Vorrichtung nach Anspruch 1, worin die Isolierschicht (17) aus Polystyrol gebildet ist.

## Revendications

1. Appareil destiné à l'évaluation d'une propriété particulière d'un milieu, comprenant une structure (9A, 11) formant une chambre fermée (15) et ayant au moins un élément vibrant (16A) placé à l'intérieur de ladite chambre fermée (15), de telle manière que cet élément (16A) soit physiquement isolé du milieu (13A), ladite structure (9A, 11) ayant une partie thermiquement conductrice (9A) et l'élément vibrant (16A) étant thermiquement relié, à l'intérieur de ladite chambre (15), à ladite partie thermiquement conductrice (9A) ;
des moyens d'excitation optique (11, 12A) pour fournir de l'énergie d'excitation optique audit élément vibrant (16A) de manière à provoquer la vibration de l'élément vibrant (16A) à sa fréquence de résonance ;
des moyens optiques (12A, 19A) pour surveiller et détecter la fréquence de vibration de l'élément vibrant (16A) ;
un moyen détecteur (18A), monté dans une cavité formée dans une surface extérieure de la partie thermiquement conductrice (9A) de manière à permettre le contact avec ledit milieu, ledit moyen détecteur (18A) étant un matériau réagissant chimiquement avec le moyen et étant thermiquement activé lorsqu'il est mis en contact avec ledit milieu ayant ladite propriété particulière, pour modifier la température de la chambre, et, par conséquent, la fréquence de résonance de l'élément vibrant (16A) par transfert de chaleur par l'intermédiaire de la partie thermiquement conductrice (9A), lesdites modifications de ladite fréquence de résonance étant surveillées et détectées par les moyens optiques de surveillance et de détection (12A, 19A), qui fournissent une évaluation de la présence de ladite propriété particulière dudit milieu,
les surfaces de ladite structure (9A, 11), autres que ladite surface extérieure comportant la cavité, étant thermiquement isolées par une couche isolante (17).

2. Appareil selon la revendication 1, dans lequel le moyen détecteur (18A) comprend un enzyme, sélectionné de telle manière que la propriété particulière à détecter soit le substrat de l'enzyme.

3. Appareil selon la revendication 2, dans lequel le moyen détecteur (18A) comprend une barrière de diffusion.

4. Appareil selon la revendication 1, dans lequel la partie thermiquement conductrice (9A) est une partie de plaquette en semi-conducteur, ledit élément vibrant (16A) étant formé à l'intérieur d'un premier caisson dans la face supérieure de la plaquette et ledit moyen détecteur étant placé dans un second caisson, ou cavité, dans la face inférieure de la plaquette.

5. Appareil selon la revendication 4, comprenant en outre une fibre optique (11) fixée à la face supérieure de la plaquette et recouvrant ledit premier caisson, ladite fibre optique (11) étant destinée à fournir l'énergie d'excitation optique et à surveiller et détecter la fréquence de vibration de l'élément vibrant (16A).

6. Appareil selon la revendication 1, dans lequel la partie thermiquement conductrice (9A) est une plaquette de silicium, la couche isolante (17) étant constituée d'un ou plusieurs oxydes de silicium.

7. Appareil selon la revendication 1, dans lequel la couche isolante (17) est constituée de polystyrène.
